(19) Europäisches Patentamt
European Patent Office
Office européen des brevets

(11) **EP 1 090 052 B1**

(12) **EUROPÄISCHE PATENTSCHRIFT**

(45) Veröffentlichungstag und Bekanntmachung des Hinweises auf die Patenterteilung:
**07.09.2005 Patentblatt 2005/36**

(51) Int Cl.$^7$: **C08G 12/32**, C08L 61/28, C09J 161/28

(21) Anmeldenummer: **99924974.1**

(22) Anmeldetag: **14.05.1999**

(86) Internationale Anmeldenummer:
**PCT/EP1999/003334**

(87) Internationale Veröffentlichungsnummer:
**WO 1999/061499 (02.12.1999 Gazette 1999/48)**

(54) **VERFAHREN ZUR VERRINGERUNG DES FORMALDEHYDGEHALTS IN SAUREN LÖSUNGEN VON MELAMIN-FORMALDEHYDHARZEN**

METHOD FOR DECREASING THE FORMALDEHYDE CONTENT IN ACIDIC SOLUTIONS OF MELAMINE FORMALDEHYDE RESINS

PROCEDE DE REDUCTION DE LA TENEUR EN FORMALDEHYDE DE SOLUTIONS ACIDES DE RESINES MELAMINE-FORMALDEHYDE

(84) Benannte Vertragsstaaten:
**BE DE ES FR GB IT**

(30) Priorität: **23.05.1998 DE 19823155**

(43) Veröffentlichungstag der Anmeldung:
**11.04.2001 Patentblatt 2001/15**

(73) Patentinhaber: **Henkel Kommanditgesellschaft auf Aktien**
**40589 Düsseldorf (DE)**

(72) Erfinder: **RÜSSE, Steffen**
**D-40789 Monheim (DE)**

(56) Entgegenhaltungen:
**BE-A- 699 735          GB-A- 1 121 649**

- **PATENT ABSTRACTS OF JAPAN vol. 001, no. 054 (C-014), 25. Mai 1977 (1977-05-25) & JP 52 015595 A (SANWA CHEM:KK), 5. Februar 1977 (1977-02-05)**
- **CHEMICAL ABSTRACTS, vol. 96, no. 22, 31. Mai 1982 (1982-05-31) Columbus, Ohio, US; abstract no. 182184, PROCHAZKA, MILOS: "Urea-formaldehyde resin" XP002114859 & CS 192 269 B (PROCHAZKA MILOS, PODLAHA JAROSLAV) 31. August 1979 (1979-08-31)**

**Beschreibung**

Saure wäßrige Lösungen von Melamin-Formaldehydharzen werden in folgenden technischen Gebieten eingesetzt: in der Papierindustrie, als Bindemittel von Wasser- und Lösemittellacken, als Adsorptionsoder Flockungsmittel bei der Abwasserbehandlung sowie zur Koagulierung von Lösemittel- oder Wasserlakken, beispielsweise bei der Fahrzeuglackierung.

Im Sinne dieser Erfindung umfaßt der Begriff der "wäßrigen Lösung" nicht nur niedermolekulare, sondern auch kolloide Lösungen. Für die genannten Anwendungsgebiete sind die Melamin-Formaldehydpolymere in der Regel so weit vernetzt, daß sie im kolloiden Größenbereich liegen. Herstellungsbedingt enthalten diese Lösungen bei einem Gehalt an etwa 5 bis etwa 30 Gew.-% Melamin-Formaldehydharz freies Formaldehyd in einem Konzentrationsbereich zwischen etwa 0,2 und etwa 4 Gew.-%. Da Formaldehyd gesundheitliche Schädigungen hervorrufen kann und zudem als krebserregend angesehen wird, ist es wünschenswert, den Gehalt an freiem Formaldehyd abzusenken.

Die GB-A-1 121 649 beschreibt Lösungen von Melamin-Formaldehydharzen mit einem pH-Wert im Bereich von 5-9. Durch Zumischen von Wasserstoffperoxid oder Persaüre wird eine Oxidation des Formaldehyds bewirkt

Die Herstellung von Melamin-Formaldehydharzen und ihr Einsatz als saure kolloide Lösung zur Lackkoagulierung ist in der US-A-4 656 059 beschrieben. Dieses Dokument enthält detaillierte Angaben zur Herstellung und zum Einsatz derartiger Harze. Zur Herstellung der Melamin-Formaldehydharze und einer sauren kolloiden Lösung hiervon werden in diesem Dokument folgende Angaben gemacht:

In 93 ml destilliertem Wasser vermischt man 63 g Melamin und 30 g Formaldehyd oder Paraformaldehyd. Die Mischung wird durch Zugabe von Natronlauge auf pH 10 eingestellt und auf 70 °C erwärmt. Sie wird 5 Minuten bei dieser Temperatur gehalten und anschließend auf Raumtemperatur abgekühlt. Hierbei scheidet sich Methylolmelamin ab. Der Niederschlag wird filtriert, mit Methanol gewaschen und im Vakuum getrocknet. Um die Harze in den genannten Gebieten einsetzen zu können werden sie sauer teilvernetzt. Hierzu werden die Ausgangsstoffe (Melamin-Formaldehyd, teilweise verethert) als Pulver oder gelöst in z. B. Wasser oder Alkoholen mit Säure umgesetzt. Zur Herstellung einer sauren wäßrigen Lösung rührt man 10 g des Methylolmelamins in 100 ml einer wäßrigen 1,35 %igen Salzsäure ein. Vor ihrer Verwendung läßt man diese Lösung zum Altern bei Raumtemperatur 12 Tage stehen.

Die Melamin-Formaldehydharze können in zumindest teilweise veretherter Form vorliegen. Hierzu werden die unveretherten Harze mit Alkoholen mit vorzugsweise 1 bis 5 C-Atomen verethert. Beispiele derartiger Alkohole sind Methanol, Ethanol sowie Propanol, Butanol, Pentanol und ihre Isomere. Vorzugsweise verethert man mit Methanol und/oder n-Butanol.

Für den Einsatz als Lackkoaguliermittel wird erfindungsgemäß als Säure Ameisensäure verwendet, da diese weniger korrosiv wirkt als Salzsäure. Mehrbasische Säuren sind in der Regel ungeeignet, da sie zur Bildung eines Niederschlags führen. Salpetersäure führt mit der Zeit, stärker oxidierende Säure wie beispielsweise Perchlorsäure nach kurzer Zeit zu einer oxidativen Schädigung des Harzes.

Die Aufgabe, den Gehalt an freiem Formaldehyd in derartigen sauren wäßrigen Lösungen abzusenken, ist gemäß der WO 94/10231 dadurch lösbar, daß man dieser Lösung eine β-Diketoverbindung zusetzt. Diese kann mit dem freien Formaldehyd reagieren. Dieses Verfahren hat den Nachteil, daß man 2 Mol eines Reagenzes mit einem gegenüber Formaldehyd hohem Molekulargewicht zusetzen muß, um 1 Mol Formaldehyd zu binden. Die Gewichtsrelation von beseitigtem Formaldehyd zu eingesetztem Reagenz ist also sehr ungünstig, was zu ökonomischen und bei der Entsorgung auch zu ökologischen Nachteilen führt.

Die Erfindung stellt sich demgegenüber die Aufgabe, den freien Formaldehydgehalt von sauren wäßrigen Lösungen von Melamin-Formaldehydharzen auf eine einfache und ökonomische Weise abzusenken, ohne daß hierbei das Melamin-Formaldehydharz geschädigt wird.

Diese Aufgabe wird gelöst durch ein Verfahren zur Verringerung des Gehalts an freiem Formaldehyd in sauren Lösungen von Melamin-Formaldehydharzen, wobei man eine saure wäßrige Lösung, die als Säure Ameisensäure enthält, einen pH-Wert im Bereich von 0,5 bis 4 aufweist und die zwischen 5 und 30 Gew.-% Melamin-Formaldehydharz enthält, mit 0,1 bis 6 Gew.-%, bezogen auf die saure wäßrige Lösung des Melamin-Formaldehydharzes, eines Oxidationsmittels ausgewählt aus Wasserstoffperoxid, Perameisensäure und/oder Peressigsäure versetzt.

Demnach oxidiert man das Formaldehyd durch ein geeignetes Oxidationsmittel (Wasserstoffperoxid, Perameisensäure, Peressigsäure oder eine Mischung hiervon) zu Ameisensäure und/oder zu $CO_2$ und $H_2O$. Die Oxidationsmittel weisen eine Molmasse auf, die ungefähr derjenigen des Formaldehyds entspricht. Im genannten Konzentrationsbereich führen sie nicht zu einer Schädigung des Harzes, bewirken jedoch eine deutliche Absenkung des Formaldehydgehalts. Dieser wird je nach Verfahrensführung von Ausgangswerten im Bereich zwischen 0,2 und 4 Gew.-% auf Werte im Bereich von 10 ppm bis 1 Gew.-% abgesenkt.

Die ausgewählten Oxidationsmittel Wasserstoffperoxid, Perameisensäure und/oder Peressigsäure haben ein Redoxpodential, bei dem sich Formaldehyd gut oxidieren läßt, das Melamin-Formaldehydharz jedoch nicht nennenswert oxidativ geschädigt wird. Alternative Oxidationsmittel wie beispielsweise Natriumperborat erwiesen sich nicht als effizient genug oder führen wie beispielsweise im Falle von Kaliumpermanganat, Kaliumperoxodisulfat oder Natriumsulfit zu einer Zusetzung des Melamin-Formaldehydharzes oder zum Ausfallen einer weißen Paste aus der wäßrigen sauren Lösung.

Die Zerstörung des Formaldehyds kann nach unterschiedlichen Verfahrensvarianten erfolgen:

Gemäß Variante A löst man 5 bis 30 Gew.-% Melamin-Formaldehydharz in einer sauren wäßrigen Lösung auf, die 0,3 bis 20 Gew.-% Ameisensäure enthält. Man hält diese Lösung in einem Temperaturbereich von etwa 5 bis etwa 30 °C und gibt innerhalb von 3 Stunden nach ihrer Herstellung 0,1 bis 5 Gew.-%, bezogen auf die saure wäßrige Lösung des Melamin-Formaldehydharzes, Wasserstoffperoxid, Perameisensäure und/oder Peressigsäure zu. Hierbei sinkt der Gehalt an freiem Formaldehyd, der anfänglich im Bereich von 0,2 bis 4 Gew.-% liegt, auf Werte im Bereich von etwa 0,01 bis etwa 1 Gew.-% ab.

Gemäß Variante B stellt man zunächst eine wäßrige saure Lösung von Melamin-Formaldehydharz wie in Variante A her. Man läßt diese bei einer Temperatur im Bereich von etwa 5 bis etwa 30 °C für eine Zeitdauer im Bereich von 3 bis 48 Stunden, vorzugsweise im Bereich von 3 bis 24 Stunden stehen. Dies führt zu einer Teilvernetzung des Melamin-Formaldehydpolymers und macht dieses unempfindlicher gegen einen Angriff des Oxidationsmittels. Nach der genannten Wartezeit werden dieser Lösung zwischen 0,1 und 6 Gew.-%, bezogen auf die saure wäßrige Lösung des Melamin-Formaldehydharzes, Wasserstoffperoxid, Perameisensäure und/oder Peressigsäure zugegeben. Auch hierbei sinkt der Gehalt an freiem Formaldehyd auf Werte zwischen 0,01 und 1 Gew.-%. Eine oxidative Schädigung des Harzes wird zuverlässiger vermieden als gemäß Variante A.

Gemäß Variante C stellt man ebenfalls zunächst wie in Variante A eine saure wäßrige Lösung des Melamin-Formaldehydharzes her. Man erwärmt diese auf eine Temperatur im Bereich von 30 bis 100 °C, beispielsweise im Bereich von 50 bis 70 °C und insbesondere auf etwa 60 °C. Unter diesen Temperaturbedingungen ist die Teilvernetzung des Melamin-Formaldehydharzes nach etwa 30 Minuten abgeschlossen. Man gibt nach einer Zeitdauer von etwa 30 Minuten bis etwa 5 Stunden nach dem Aufheizen der sauren wäßrigen Lösung auf die Reaktionstemperatur 0,1 bis 6 Gew.-%, bezogen auf die saure wäßrige Lösung des Melamin-Formaldehydharzes, Wasserstoffperoxid, Perameisensäure und/oder Peressigsäure zu. Der Gehalt an freiem Formaldehyd wird hierdurch auf Werte zwischen etwa 10 ppm und etwa 0,5 Gew.-% abgesenkt.

Die vorzugsweise einzusetzende Menge an Oxidationsmittel (Wasserstoffperoxid, Perameisensäure und/oder Peressigsäure) hängt vom Gehalt der sauren wäßrigen Lösung an Melamin-Formaldehydharz ab, da ein höherer Harzgehalt üblicherweise mit einem höheren Gehalt an freiem Formaldehyd korreliert. Man setzt also um so mehr Oxidationsmittel ein, je höher der Gehalt an Melamin-Formaldehydharz ist. Bei Gehalten in der Größenordnung von 15 Gew.-% Melamin-Formaldehydharz werden gemäß Variante A vorzugsweise 0,3 bis 3 Gew.-%, gemäß Varianten B und C vorzugsweise zwischen 0,5 und 5 Gew.-% Oxidationsmittel zugegeben.

Durch die Reaktion mit dem Oxidationsmittel verringert sich die Konzentration des freien Formaldehyds in der Lösung des Melamin-Formaldehydharzes. Hierdurch steht weniger freies Formaldehyd für eine weitere Vernetzungsreaktion zur Verfügung. Die Lösungen der Melamin-Formaldehydharze werden daher durch den Abbau des freien Formaldehyds gegen weitere Vernetzung stabilisiert. Dies erlaubt es, stabile Lösungen mit höheren Gehalten an Melamin-Formaldehydharzen in lagerfähiger Form herzustellen, als es ohne die Absenkung der Formaldehydkonzentration möglich wäre.

Erwartungsgemäß hängt die Schnelligkeit der Oxidation des Formaldehyds von der Temperatur ab, bei der das Oxidationsmittel zugegeben wird. Die angestrebte Absenkung des Gehalts an freiem Formaldehyd wird gemäß Variante C kurzfristig erreicht, während sie nach den Varianten A und B einige Stunden in Anspruch nehmen kann.

In allen Varianten können Wasserstoffperoxid, Perameisensäure oder Peressigsäure als Reinsubstanzen oder als wäßrige Lösungen zugegeben werden. Aus Sicherheitsgründen sind wäßrige Lösungen bevorzugt. Beispielsweise setzt man Wasserstoffperoxid vorzugsweise als kommerziell erhältliche, etwa 30 Gew.-%ige wäßrige Lösung ein.

Die saure wäßrige Lösung des Melamin-Formaldehydharzes weist vor der Zugabe des Oxidationsmittels vorzugsweise einen pH-Wert im Bereich von etwa 1,5 bis etwa 3,5 auf. Als Oxidationsmittel wird aus wirtschaftichen Gründen vorzugsweise Wasserstoffperoxid verwendet.

Das erfindungsgemäße Verfahren stellt eine ökologisch und ökonomisch vorteilhafte Alternative zum Verfahren gemäß WO 94/10231 dar, den Gehalt an freiem Formaldehyd in sauren wäßrigen Lösungen von Melamin-Formaldehydharzen deutlich abzusenken. Der Einsatz derartige saurer wäßriger Lösungen auf den genannten Einsatzgebieten ist hierdurch mit weniger gesundheitlichen Risiken verbunden. Besonders konzipiert ist die Erfindung für den Einsatz der sauren wäßrigen Lösungen der Melamin-Formaldehydharze für die Koagulierung von Lösemittel- oder Wasserlacken im Fahrzeugbau. Die Einsatzbedingungen hierfür sind in der genannten US-A-4 656 059 detailliert beschrieben, worauf hiermit nochmals ausdrücklich Bezug genommen wird.

Der Gehalt an freiem Formaldehyd in den genannten sauren wäßrigen Lösungen läßt sich nach folgendem Verfahren bestimmen:

Reagenzien

- Isopropanol
- Natriumsulfit, 1 M (126 g/l)
- Salzsäure, 0,1 M
- Natronlauge, 0,1 M
- Thymolphtalein (0,1% in 90%igem EtOH)

Analyse

**Lösung X:**

- in ein 250 ml Becherglas werden 6 g der Probe abgewogen
- Zugabe von 5 ml Isopropanol
- 100 g gestoßenes Eis werden zugegeben, die Temperatur soll zwischen 0 und-10°C liegen
- Zugabe von 5 Tropfen Indikatorlösung
- Tritration mit 0,1 M Natronlauge, bis die Blaufärbung mindestens 30 Sekunden anhält

**Lösung Y:**

- 10,0 ml einer 0,1 M Salzsäure werden in ein 250 ml Becherglas gegeben.
  Die nächsten Schritte müssen in **maximal 60 Sekunden** erfolgen:
- Lösung X wird in das Becherglas mit der vorgelegten Salzsäure gegeben (Lösung Y)
- Zugabe von 15 ml Natriumsulfitlösung (entspricht 15 mmol = 0,45 g Formaldehyd)
- Die Lösung wird mit 0,1 M Natronlauge titriert bis sie intensiv blau ist. (Maßzahl B)
- Der Verbrauch sollte zwischen 4-6 ml liegen.

Berechnung

$$\text{Formaldehyd [in \%]} = \frac{\{(A * t1)-(B * t2)\} * 30, 03 * 100}{W * 1000}$$

A [in ml]: Vorgelegte Salzsäure
B [in ml]: Verbrauch an Natronlauge
W [in g]: Probengewicht
t1: Titer HCl
t2: Titer NaOH

**Patentansprüche**

1. Verfahren zur Verringerung des Gehalts an freiem Formaldehyd in sauren Lösungen von Melamin-Formaldehydharzen, wobei man eine saure wäßrige Lösung, die zwischen 5 und 30 Gew.-% Melamin-Formaldehydharz enthält, mit 0,1 bis 6 Gew.-%, bezogen auf die saure wäßrige Lösung des Melamin-Formaldehydharzes, eines Oxidationsmittels ausgewählt aus Wasserstoffperoxid, Perameisensäure und/oder Peressigsäure versetzt, **dadurch gekennzeichnet, daß** die saure wäßrige Lösung als Säure Ameisensäure enthält und daß sie einen pH-Wert im Bereich von 0,5 bis 4 aufweist.

2. Verfahren nach Anspruch 1, **dadurch gekennzeichnet, daß** man eine saure wäßrige Lösung eines Melamin-Formaldehydharzes mit einer Temperatur im Bereich von 5 bis 30 °C herstellt und innerhalb von 3 Stunden mit 0,1 bis 5 Gew.-%, bezogen auf die saure wäßrige Lösung des Melamin-Formaldehydharzes, Wasserstoffperoxid, Perameisensäure und/oder Peressigsäure versetzt.

3. Verfahren nach Anspruch 1, **dadurch gekennzeichnet, daß** man eine saure wäßrige Lösung eines Melamin-Formaldehydharzes mit einer Temperatur im Bereich von 5 bis 30 °C herstellt und nach einer Zeitdauer von 3 bis 48 Stunden mit 0,1 bis 6 Gew.-%, bezogen auf die saure wäßrige Lösung des Melamin-Formaldehydharzes, Wasserstoffperoxid, Perameisensäure und/oder Peressigsäure versetzt.

4. Verfahren nach Anspruch 1, **dadurch gekennzeichnet, daß** man eine saure wäßrige Lösung eines Melamin-Formaldehydharzes mit einer Temperatur im Bereich von 30 bis 100 °C herstellt und nach einer Zeitdauer von 30 Minuten bis 5 Stunden mit 0,1 bis 6 Gew.-%, bezogen auf die saure wäßrige Lösung des Melamin-Formaldehydharzes, Wasserstoffperoxid, Perameisensäure und/oder Peressigsäure versetzt.

5. Verfahren nach einem oder mehreren der Ansprüche 1 bis 4, **dadurch gekennzeichnet, daß** die saure wäßrige Lösung des Melamin-Formaldehydharzes einen pH-Wert im Bereich von 1,5 bis 3,5 hat.

6. Verfahren nach einem oder mehreren der Ansprüche 1 bis 5, **dadurch gekennzeichnet, daß** man die saure wäßrige Lösung des Melamin-Formaldehydharzes mit Wasserstoffperoxid versetzt.

## Claims

1. A process for reducing the content of free formaldehyde in acidic solutions of melamine/formaldehyde resins, 0.1 to 6% by weight - based on the acidic aqueous solution of the melamine/formaldehyde resin - of an oxidizing agent selected from hydrogen peroxide, performic acid and/or peracetic acid being added to an acidic aqueous solution containing between 5 and 30% by weight melamine/formaldehyde resin, **characterized in that** the acidic aqueous solution contains formic acid as acid and has a pH of 0.5 to 4.

2. A process as claimed in claim 1, **characterized in that** an acidic aqueous solution of a melamine/formaldehyde resin with a temperature of 5 to 30°C is prepared and 0.1 to 5% by weight - based on the acidic aqueous solution of the melamine/formaldehyde resin - of hydrogen peroxide, performic acid and/or peracetic acid is added over a period of 3 hours.

3. A process as claimed in claim 1, **characterized in that** an acidic aqueous solution of a melamine/formaldehyde resin with a temperature of 5 to 30°C is prepared and 0.1 to 6% by weight - based on the acidic aqueous solution of the melamine/formaldehyde resin - of hydrogen peroxide, performic acid and/or peracetic acid is added after a period of 3 to 48 hours.

4. A process as claimed in claim 1, **characterized in that** an acidic aqueous solution of a melamine/formaldehyde resin with a temperature of 30 to 100°C is prepared and 0.1 to 6% by weight - based on the acidic aqueous solution of the melamine/formaldehyde resin - of hydrogen peroxide, performic acid and/or peracetic acid is added after a period of 30 minutes to 5 hours.

5. A process as claimed in one or more of claims 1 to 4, **characterized in that** the acidic aqueous solution of the melamine/formaldehyde resin has a pH of 1.5 to 3.5.

6. A process as claimed in one or more of claims 1 to 5, **characterized in that** hydrogen peroxide is added to the acidic aqueous solution of the melamine/formaldehyde resin.

## Revendications

1. Procédé de réduction de la teneur en formaldéhyde libre dans des solutions acides de résines mélamine-formaldéhyde, dans lequel on mélange une solution acide aqueuse, qui contient entre 5 et 30 % en poids de résine mélamine-formaldéhyde, avec de 0,1 à 6 % en poids, par rapport à la solution acide aqueuse de résine mélamine-formaldéhyde, d'un oxydant choisi parmi le peroxyde d'hydrogène, l'acide performique et/ou l'acide peracétique, **caractérisé en ce que** la solution acide aqueuse contient comme acide l'acide formique et **en ce qu'**elle présente un pH allant de 0,5 à 4.

2. Procédé selon la revendication 1 **caractérisé en ce qu'**on prépare une solution acide aqueuse d'une résine mélamine-formaldéhyde ayant une température allant de 5 à 30°C et **en ce qu'**on la mélange en 3 heures avec de 0,1 à 5 % en poids, par rapport à la solution acide aqueuse de résine mélamine-formaldéhyde, de peroxyde d'hydrogène, d'acide performique et/ou d'acide peracétique

3. Procédé selon la revendication 1, **caractérisé en ce qu'**on prépare une solution acide aqueuse d'une résine mélamine-formaldéhyde ayant une température allant de 5 à 30°C et **en ce qu'**au bout d'une durée de 3 à 48 heures on la mélange avec de 0,1 à 6 % en poids, par rapport à la solution acide aqueuse de résine mélamine-formaldéhyde, de peroxyde d'hydrogène, d'acide performique et/ou d'acide peracétique.

4. Procédé selon la revendication 1, **caractérisé en ce qu'**on prépare une solution acide aqueuse d'une résine mélamine-formaldéhyde ayant une température allant de 30 à 100°C et **en ce qu'**au bout d'une durée de 30 minutes à 5 heures on la mélange avec de 0,1 à 6 % en poids, par rapport à la solution acide aqueuse de résine mélamine-formaldéhyde, de peroxyde d'hydrogène, d'acide performique et/ou d'acide peracétique.

5. Procédé selon une ou plusieurs des revendications 1 à 4, **caractérisé en ce que** la solution acide aqueuse de résine mélamine-formaldéhyde présente un pH allant de 1,5 à 3,5.

6. Procédé selon une ou plusieurs des revendications 1 à 5, **caractérisé en ce qu'**on mélange la solution acide aqueuse de résine mélamine-formaldéhyde avec du peroxyde d'hydrogène.